# EUROPEAN PATENT APPLICATION

(11) **EP 3 156 124 A1**
(43) Date of publication of application: **19.04.2017**
(21) Application number: 16194008.5
(22) Date of filing: 14.10.2016
(51) Int. Cl.: B01J 23/00, B01J 23/56, B01J 23/58, B01J 23/63, B01J 27/13, C10G 35/09

(54) **A CATALYST, A PROCESS FOR PREPARATION OF THE CATALYST AND APPLICATION THEREOF**

(30) Priority: 16.10.2015 IN 3940MU2015
(71) Applicant: Reliance Industries Limited, Mumbai 400 021 Maharashtra (IN)
(72) Inventor: SHARMA, Nagesh, 390024 Vadodora (IN); KUMAR, Ajay, 390023 Vadodara (IN); KATRAVULAPALLI, Bhaskara Rama Murthy Veera Venkata Satya, 500070 Hyderabad (IN); METTU, Anilkumar, 522603 Guntur (Dt). (IN); GOPALAKRISHNAN, Kalpana, 390020 Vadodara (IN); JASRA, Raksh Vir, 390024 Vadodara (IN)
(74) Representative: Srinivasan, Ravi Chandran

(57) **Abstract**

The present disclosure relates to a composition, wherein the composition is a catalyst comprising support matrix, active metal, promoter metal and halide, wherein the support matrix is additionally subjected to a modifier to obtain a modified support matrix. The catalyst in the reaction reduces the percentage coke formation and provides for an enhanced reformate yield having an increase total aromatic yield and C8 aromatic yield when compared to the known/commercially available catalyst for naphtha reforming process, and also improves the quality of reformate obtained at end of the reaction. The disclosure further relates to process of preparation of the catalyst, the catalyst of the present disclosure derived from the process described, displays lower deactivation during the reaction demonstrating increased stability and reduction in the regeneration frequency and thereby making the catalyst economically feasible.

## Description

### TECHNICAL FIELD

The present disclosure relates to a catalyst comprising support matrix, active metal, promoter metal and halide, wherein the support matrix is additionally subjected to a modifier to obtain a modified support matrix. The catalyst of the present disclosure exhibits increased activity, selectivity and stability when used for reforming process. Besides that it enhances the reformate yield with reduced coke formation when compared to the available catalyst for reforming process, production of aromatics and improving the quality of reformate. The disclosure further relates to the process for preparing the catalyst of the present disclosure. The catalyst of the present disclosure derived from the process described herein, displays lower deactivation rate during reactions demonstrating reduced regeneration frequency, thereby making the catalyst economically feasible.

### BACKGROUND

Catalytic reforming is a well-established industrial process applied by the petroleum industry for improving the octane quality of naphtha and production of aromatics. In catalytic reforming, a functional catalyst is employed which contains metal function, to govern reactions such as dehydrogenation and hydrogenation of naphthenes. During the reaction the catalyst deactivates continuously due to coking, and as the coke builds up on the catalyst surface, the reaction temperature has to be increased gradually to offset the loss of catalyst activity. Over a period of time it is no longer feasible economically to continue operations. There are numbers of catalysts available, which are being used for catalytic naphtha reforming process, wherein platinum alone or with combination of metals such as rhenium, iridium, tin and germanium is employed on a support matrix. In reforming catalysts, a certain level of catalyst acidity is required to initiate essential isomerization reactions; whereas presence of acidity more than required level leads to both yield loss and catalyst deactivation. Although, these catalysts exists, there still is a need for further improvement, especially with regard to catalyst activity, selectivity, stable performance and importantly reducing the laydown of coke due to formation of undesirable heavier products, which is affecting the activity of the catalyst. In view of the above said, there is a need for developing a better catalyst and a process for developing such catalyst to overcome the limitations observed with respect to the catalysts known in the art.

### SUMMARY OF THE DISCLOSURE

The present disclosure relates to a catalyst comprising components including but not limiting to a support matrix subjected to a modifier to obtain a modified support matrix, active metal, promoter metal and halide.

In an exemplary embodiment, the support matrix of the catalyst of the present disclosure is modified by contacting the support matrix with modifier such as chemical element including but not limiting to alkaline earth metal and lanthanide, or a combination thereof.

In a preferred embodiment, the present disclosure relates to a catalyst comprising an aluminum support matrix, modified by combination of alkaline earth metal and lanthanide. This modified catalyst is thereafter chlorinated and impregnated with platinum and tin to obtain the final catalyst of the present disclosure.

The present disclosure further relates to a process for preparing the catalyst composition, said process comprising steps of:
a. subjecting a support matrix to a modifier, followed by drying and calcining the support matrix to obtain a modified support matrix;
b. contacting the modified support matrix of step a) with a halide; and
c. contacting the modified support matrix of step b) with active metal and promoter metal, followed by calcining to obtain the catalyst composition.

In another embodiment, the present disclosure relates to a use of the catalyst composition for reducing coke formation to at least 4% to 5% per kg of a feed, wherein the catalyst composition comprises support matrix, active metal, promoter metal and halide and wherein the support matrix is a modified support matrix.

In a non-limiting embodiment, the catalyst of the present disclosure has a lower deactivation rate and increased activity, selectivity and stability, leading to reduced regeneration frequency and increased economic feasibility. The catalyst also provides for increased reformate yield, suppression of acid site cracking and reduced coke formation during catalytic reforming process.

### BRIEF DESCRIPTION OF ACCOMPANYING FIGURES

**FIGURE 1****:** Illustrates C5+ reformate yield at SOR and EOR for catalyst-2 and reference catalyst.
**FIGURE 2****:** Illustrates C8 aromatics yield over hours on stream for catalyst-2 and reference catalyst.
**FIGURE 3****:** Illustrates total aromatics yield over hours on stream for catalyst-2 and reference catalyst.
**FIGURE 4****:** Illustrates acidity sites of catalyst-2 and reference catalyst, analyzed by using NH3-TPD adsorption-desorption method.
**FIGURE 5****:** Illustrates temperature programmed reduction (TPR) profiles for catalyst-2 and reference catalyst.
**FIGURE 6****:** Illustrates pore size distribution of catalyst-2 and reference catalyst, analyzed by using Barret-Joyner-Halenda (BJH) method.
**FIGURE 7****:** Illustrates C8 aromatic yield with respect to the catalysts (catalyst-2, catalyst-3 and catalyst-4) of the present disclosure and reference catalyst.
**FIGURE 8****:** Illustrates total aromatic yield with respect to the catalysts (catalyst-2, catalyst-3 and catalyst-4) of the present disclosure and reference catalyst.
**FIGURE 9****:** Illustrates C5+ reformate yield at SOR and EOR for catalyst-3 and reference catalyst.
**FIGURE 10****:** Illustrates C8 aromatics yield over hours on stream for catalyst-3 and reference catalyst.
**FIGURE 11****:** Illustrates total aromatics yield over hours on stream for catalyst-3 and reference catalyst.
**FIGURE 12****:** Illustrates C5+ reformate yield at SOR and EOR for catalyst-4 and reference catalyst.
**FIGURE 13****:** Illustrates C8 aromatics yield over hours on stream for catalyst-4 and reference catalyst.
**FIGURE 14****:** Illustrates total aromatics yield over hours on stream for catalyst-4 and reference catalyst.

### DETAILED DESCRIPTION

The present disclosure relates to a composition, wherein the composition is a catalyst having a catalytic activity which provides for an increased reformate yield and reduced coke formation during the process of catalytic reforming.

In a non-limiting embodiment, the catalyst of the present disclosure has lower deactivation rate and increased activity, selectivity and stability, leading to reduced regeneration frequency and increased economic feasibility. In a preferred embodiment, the catalyst of the present disclosure is a reforming catalyst.

In an embodiment, the catalyst of the present disclosure comprises components including but not limiting to a support matrix, active metal, promoter metal and halide, wherein the support matrix is additionally subjected to a modifier to obtain a modified support matrix. The present disclosure thus provides a catalyst whose performance is improved with simultaneous optimization of acid site cracking through the use of support matrix modification with alkaline earth metals and lanthanides.

In a non-limiting embodiment, the support matrix of the catalyst is an inorganic oxide including but not limiting to alpha alumina, theta alumina, gamma alumina, delta alumina, eta alumina, silica alumina, cordierite, zirconia, titania, zeolites and non-zeolitic molecular sieves (NZMS), or any combination thereof. In an exemplary embodiment, the support matrix includes but is not limited to alpha alumina, theta alumina, gamma alumina, delta alumina, eta alumina, theta alumina and silica alumina, or any combination thereof. In a preferred embodiment, the support matrix is gamma alumina.

In an embodiment, the support matrix including but not limiting to alpha alumina, theta alumina, gamma alumina, delta alumina, eta alumina, silica alumina, cordierite, zirconia, titania, zeolites and non-zeolitic molecular sieves (NZMS), or any combination thereof, is modified by contacting said support matrix with modifier such as chemical element including but not limiting to alkaline earth metal and lanthanide, or any combination thereof.

In an exemplary embodiment, the alkaline earth metal includes but is not limited to beryllium, magnesium, calcium, strontium, and barium, or any combination thereof.
In an exemplary embodiment, the lanthanide includes but is not limited to lanthanum, cerium, praseodymium, neodymium, promethium, samarium, europium, gadolinium, terbium, dysprosium, holmium, erbium, thulium, ytterbium and lutetium, or any combination thereof.

In a preferred embodiment, the support matrix of the catalyst is modified by the alkaline earth metal such as magnesium and barium, or a combination thereof. In an alternate preferred embodiment, the support matrix of the catalyst is modified by lanthanum.

In another preferred embodiment, the support matrix of the catalyst is modified by a combination of an alkaline earth metal such as magnesium and a lanthanide such as lanthanum. Thus, the support matrix of the catalyst may comprise a combination of magnesium and lanthanum.

In an exemplary embodiment, the active metal of the catalyst includes but is not limited to ruthenium, rhodium, palladium, osmium, iridium and platinum, or any combination thereof.

In a preferred embodiment, the active metal of the catalyst is platinum.

In an exemplary embodiment, the promoter metal of the catalyst includes but is not limited to tin, germanium, rhenium, gallium, bismuth, lead, indium, cerium and zinc, or any combination thereof.

In a preferred embodiment, the promoter metal of the catalyst is tin.

In an exemplary embodiment, the halide of the catalyst includes but is not limited to fluorine, chlorine and bromine, or any combination thereof.

In a preferred embodiment, the halide of the catalyst is either in the elemental form or in the ionic form.

In another preferred embodiment, the halide of the catalyst is in the ionic form, wherein the halide is chloride.

In a non-limiting embodiment, the modifier including but not limiting alkaline earth metal such as magnesium and barium and lanthanide such as lanthanum, independently or in combination within the catalyst, are at a concentration ranging from about 0.01wt% to about 0.5 wt %.
In an exemplary embodiment, the magnesium and barium, independently or in combination within the catalyst are at a concentration ranging from about 0.01wt% to about 0.5wt%.

In yet another exemplary embodiment, the lanthanum within the catalyst is at a concentration ranging from about 0.01wt% to about 0.5wt%.

In a non-limiting embodiment, the active metal such as platinum within the catalyst is at a concentration ranging from about 0.01 wt% to about 0.5wt%.

In an exemplary embodiment, the platinum within the catalyst is at a concentration ranging from about 0.01wt% to about 0.5wt%.

In a non-.limiting embodiment, the promoter metal such as tin within the catalyst is at a concentration ranging from about 0.01wt% to about 0.5wt%.

In an exemplary embodiment, the tin within the catalyst is at a concentration ranging from about 0.01wt% to about 0.5wt%.

In a non-limiting embodiment, the halide such as chloride within the catalyst is at a concentration ranging from about 0.8 wt% to about 1.2wt%.

In an exemplary embodiment, the chloride within the catalyst is at a concentration ranging from about 0.8wt% to about 1.2wt%.

In a non-limiting embodiment, the concentration of the support matrix within the catalyst is the remaining percentage with respect to cumulative percentages of the components such as active metal, promoter metal and halide, wherein the active metal is at a concentration ranging from about 0.01wt% to about 0.5wt%, the promoter is at a concentration ranging from about 0.01wt% to about 0.5wt% and the halide is at a concentration ranging from about 0.8wt% to about 1.2wt%. For instance, in a case when the active metal is at a concentration of about 0.01wt%, the promoter is at a concentration of about 0.01wt% and the halide is at a concentration of about 0.8wt% then the concentration of the support matrix is about 99.18wt%. Similarly when the concentration of the active metal is about 0.5wt%, concentration of the promoter metal is about 0.5wt% and the concentration of the halide is about 1.2wt%, then the concentration of support matrix is about 97.8wt%.

Thus, in a preferred embodiment, the present disclosure relates to a catalyst comprising a gamma aluminum support matrix, modified by combination of alkaline earth metal and lanthanide in the form of magnesium and lanthanum. This modified catalyst is thereafter chlorinated and impregnated with platinum and tin to obtain the final catalyst of the present disclosure, which provides for an increased reformate yield and reduced coke formation during the process of catalytic reforming.

In a non-limiting embodiment, the catalyst of the present disclosure provides stable performance towards activity and selectivity for total aromatics during naphtha reforming.

In another non-limiting embodiment, the catalyst of the present disclosure is a bi-functional catalyst having both metal function and an acidic function.

In a non-limiting embodiment, the present disclosure also relates to a process for preparing the catalyst herein comprising support matrix, active metal, promoter metal and halide, wherein the support matrix is additionally subjected to a modifier to obtain a modified support matrix.

In an exemplary embodiment, the process for preparing the catalyst of the present disclosure comprises acts of:
a) subjecting the support matrix to a modifier by employing a method including but not limiting to impregnation using equilibrium- rotary evaporator;
b) contacting the modified support matrix of step a) with a halide; and
c) contacting the modified support matrix of step b) with active metal and promoter metal by employing a method including but not limiting to simultaneous impregnation using equilibrium- rotary evaporator to prepare and obtain the said catalyst.

In an exemplary embodiment, the process for preparing the catalyst of the present disclosure comprises acts of:
a) subjecting the support matrix to a modifier such as chemical elements including but not limiting to alkaline earth metal and lanthanide or a combination thereof, by employing a method including but not limiting to impregnation using equilibrium-rotary evaporator;
b) contacting the modified support matrix of step a) with a halide including but not limiting to fluorine, chlorine, bromine, iodine and astatine; and
c) contacting the modified support matrix of step b) with active metal such as platinum and promoter metal such as tin by employing a method including but not limiting to simultaneous impregnation using equilibrium- rotary evaporator to prepare and obtain the said catalyst.

In an exemplary embodiment, the process for preparing the catalyst of the present disclosure comprises acts of:
a) subjecting the support matrix to a modifier by impregnating the support matrix with a solution of alkaline earth metal or lanthanide or a combination thereof at a predetermined temperature for a predetermined time period with intermediate stirring, followed by subjecting the impregnated support matrix to rotary evaporator method;
b) drying the modified support of step a) at an elevated temperature for a predetermined time period, followed by calcining the modified support at a further elevated temperature for a predetermined time period;
c) contacting the calcined support matrix of step b) with a halide solution at room temperature, followed by drying the matrix at an elevated temperature for a predetermined time period; and
d) contacting the support matrix of step c) with a solution of active metal and promoter metal by simultaneous impregnation using equilibrium-rotavapor impregnation method, followed by drying the impregnated support at an elevated temperature for a predetermined time period and further calcining at a further elevated temperature to prepare and obtain the said catalyst.

In a preferred embodiment, the process for preparing the catalyst of the present disclosure comprises acts of:
a) subjecting support matrix to a modifier by impregnating the support matrix with a salt solution of alkaline earth metal or lanthanide or a combination thereof, having a solid : liquid ratio ranging from about 1:3 to about 1:7, preferably of about 1:5, at a temperature ranging from about 15°C to about 35°C with intermediate stirring, for a time period ranging from about 4 hours to about 8 hours, followed by subjecting the impregnated support matrix to rotary evaporator method having a maximum speed of 50 rpm and a temperature ranging from about 40°C to about 60°C;
b) drying the modified support of step a) at a temperature ranging from about 100°C to about 120°C for a time period ranging from about 12 hours to about 18 hours, followed by calcining the modified support at a temperature ranging from about 510°C to about 560°C for a time period ranging from about 4 hours to about 8 hours;
c) contacting the calcined support matrix of step b) with a halide solution for a time period ranging from about 12 hours to about 18 hours at a temperature ranging from about 15°C to about 35°C, followed by drying the matrix at a temperature ranging from about 100°C to about 120°C for a time period ranging from about 12 hours to about 18 hours; and
d) contacting the support matrix of step c) with a solution of active metal and promoter metal by simultaneous impregnation using equilibrium-rotavapor impregnation method, followed by drying the impregnated support at a temperature ranging from about 100°C to about 120°C for a time period ranging from about 12hours to about 18 hours and calcining at a temperature ranging from about 510°C to about 560°C for a time period ranging from about 4 hours to about 8 hours.

In a non-limiting embodiment, the modifier including but not limiting to alkaline earth metal such as magnesium and barium employed in the process for preparing the catalyst of the present disclosure ranges from about 0.01wt% to about 0.5wt%.

In another non-limiting embodiment, the modifier including but not limiting to lanthanide such as lanthanum employed in the process for preparing the catalyst of the present disclosure ranges from about 0.01wt% to about 0.5wt%.

In yet another non-limiting embodiment, the halide such as chloride employed in the process for preparing the catalyst of the present disclosure ranges from about 0.8wt% to about 1.2wt%.

In still another non-limiting embodiment, the active metal such as platinum employed in the process for preparing the catalyst of the present disclosure ranges from about 0.01wt% to about 0.5wt%.

In still another non-limiting embodiment, the promoter metal such as tin employed in the process for preparing the catalyst of the present disclosure ranges from about 0.01wt% to about 0.5wt%.

In a more preferred embodiment, the process for preparing of catalyst of the present disclosure comprises acts of:
a) subjecting gamma alumina support matrix to a modifier by impregnating the support matrix to equilibrium- rotary evaporator method, wherein the gamma alumina support matrix is contacted with a nitrate salt solution of magnesium in a ratio ranging from about 1:3 to about 1:7, preferably of about 1:5, wherein pH of the solution is about 5 to about 6, preferably 5.75 at a temperature ranging from about 15°C to about 35°C for a time period ranging from about 4 hours to about 8 hours,, followed by subjecting the matrix to equilibrium-rotary evaporator method with intermediate stirring having a speed of atleast 50 rpm and at a temperature ranging from about 40°C to about 60°C to remove excess solution;
b) drying the modified support of step a) in an oven at a temperature ranging from about 100°C to about 120°C, preferably at about 115°C for a time period ranging from about 12 hours to about 18 hours, preferably for about 15 hours, followed by calcining the modified support in a furnace at a temperature ranging from about 510°C to about 560°C, preferably at about 540°C for a time period ranging from about 4 hours to about 8hours, preferably for about 6 hours;
c) contacting the calcined magnesium modified gamma alumina support matrix of step b) with dilute hydrogen chloride solution at a temperature ranging from about 15°C to about 35°C, followed by decanting excess solution and drying the modified gamma alumina in an oven at a temperature ranging from about 100°C to about 120°C, preferably at about 115°C, for a time period ranging from about 12 hours to about 18 hours, preferably for about 15 hours; and
d) contacting the modified gamma alumina support matrix of step c) with platinum solution and tin solution by simultaneous impregnation at a temperature ranging from about 15°C to about 35°C for a time period of about 10 hours to about 15 hours, preferably 12 hours, followed by drying the metal impregnated gamma alumina support matrix at a temperature ranging from about 100°C to about 120°C, preferably at about 115°C for a time period ranging from about 12 hours to about 18 hours, preferably for about 15 hours and calcining at a temperature ranging from about 510°C to about 560°C, preferably at about 540°C, for a time period ranging from about 4 hours to about 8 hours, preferably for about 6 hours to obtain the catalyst.

In a non-limiting embodiment, the magnesium in the process for preparing the catalyst of the present disclosure ranges from about 0.01wt% to about 0.5wt%.

In yet another non-limiting embodiment, the chloride in the process for preparaing the catalyst of the present disclosure ranges from about 0.8 wt% to about 1.2wt%.

In still another non-limiting embodiment, the platinum in the process for preparing the catalyst of the present disclosure ranges from about 0.01wt% to about 0.5wt%.

In still another non-limiting embodiment, the tin in the process for preparing the catalyst of the present disclosure is ranging from about 0.01wt% to about 0.5wt%.

In an exemplary embodiment, platinum solution and tin solution are prepared by using precursors including but not limiting to hexacholoroplatinic acid (H₂PtCl₆. (H₂O)₆) and tin chloride (SnCl₂), respectively, wherein the hexacholoroplatinic acid is at a concentration of about 19.03mg/ml and tin chloride at a concentration of about 115.04mg/ml, respectively. The concentration of the precursors of platinum and tin are adjusted in order to have platinum and tin within the catalyst at a concentration ranging from about 0.01wt% to about 0.5wt%.

In another exemplary embodiment, hydrogen chloride solution is added to the solution of H₂PtCl₆. (H₂O)₆ and SnCl₂ in order to avoid precipitation of metal chloride solution. To this solution, the modified alumina support of the present disclosure is added and immersed for a time period ranging from about 6 hours to about 18 hours, preferably 12hrs, at a temperature ranging from about 15°C to about 35°C with intermediate gentle stirring. During impregnation in equilibrium, the solid (alumina support) to solution ratio is in the range of about 1:5. This is followed by removing the solution by subjecting it to rotary evaporation having a maximum speed of 50 rpm at a temperature ranging from about 40°C to about 60 °C.

The process for preparation of catalyst of the present disclosure reduces weak and strong acid site in the catalyst and thereby increases the activity and stability of the catalyst. Both weak acid site and strong acid site in the magnesium modified catalyst is reduced in comparison to the priorly known catalysts in the art. Further, the catalyst (catalyst-2) of the present disclosure tends to have 3 peaks, wherein first peak shall correspond to weak acid sites, second peak shall correspond to medium to strong acid sites and third peak shall correspond to very strong acid sites. This distinct difference in the acidity pattern of the catalyst of the present disclosure plays a significant role in performance and stability of the catalyst. unmodified catalyst (reference catalyst).

In a non-limiting embodiment, the process for preparing the catalyst of the present disclosure causes higher active metal dispersion of about 98% in the catalyst of the present disclosure when compared to unmodified catalyst (reference catalyst) having the active metal dispersion of about 86%. It is critical to note that higher active metal dispersion in the catalyst, indicates stronger interaction between the metal and the modified support matrix, which in turn is responsible for enhanced activity and stability of the catalyst.

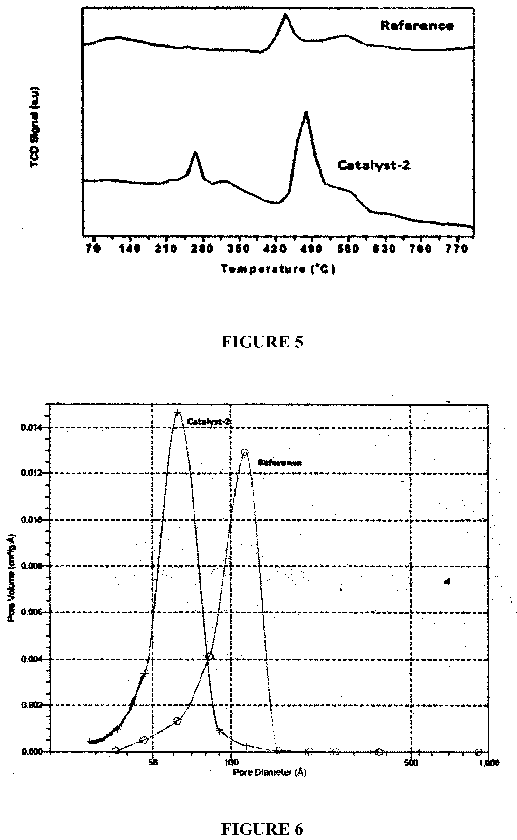

In another non-limiting embodiment, pore size distribution of the catalyst of the present disclosure ranges from about 20°A to about 100°A, when compared to the unmodified catalyst (reference catalyst), wherein the pore size distribution ranges from about 30°A to about 150°A. Due to a narrower pore size distribution in the catalyst of the present disclosure, there is a higher dispersion of active metal and promoter metal, either individually or in combination, thereby leading to higher stability and increased activity of the catalyst of the present disclosure. Figure 6 illustrates the pore size distribution of the catalyst of the present disclosure and that of the unmodified catalyst (reference catalyst).

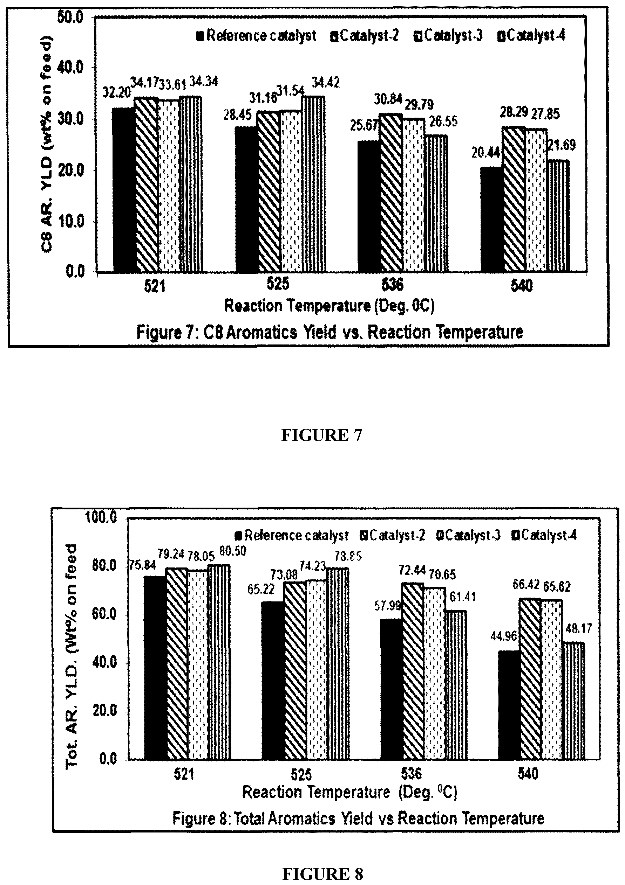

In a non-limiting embodiment, the catalyst of the present disclosure demonstrates a total C8 aromatics yield ranging from about 33% to about 35% at the start of the reaction (SOR) and ranging from about 21% to about 29% at the end of the reaction (EOR), when compared to the unmodified catalyst (reference catalyst) which demonstrate the total C8 aromatics yield of about 32% at the start of the reaction (SOR) and about 20% at the end of the reaction (EOR). Figure 7 illustrates the total C8 aromatics yield of the catalysts of the present disclosure and that of the unmodified catalyst (reference catalyst).

In another non-limiting embodiment, the catalyst of the present disclosure demonstrates a total aromatics yield ranging from about 78% to about 81% at the start of the reaction (SOR) and ranging from about 48% to about 67% at the end of the reaction (EOR), when compared to unmodified catalyst (reference catalyst) which demonstrates the total aromatics yield of about 75% at the start of the reaction (SOR) and about 44% at the end of the reaction (EOR).

Figure 8 illustrates the total aromatics yield of the catalysts of the present disclosure and that of the unmodified catalyst (reference catalyst).

In yet another non-limiting embodiment, the catalyst of the present disclosure exemplifies greater hours of stream in a catalytic reaction when compared to the unmodified reforming catalyst.

In an exemplary embodiment, the catalyst of the present disclosure demonstrates at least 60 hours of stream in a catalytic reaction when compared to the unmodified reforming catalyst.

In still another non-limiting embodiment, the catalyst of the present disclosure exemplifies reduced coke formation of about 3% when compared to the coke formation of about 6% when employing unmodified catalyst (reference catalyst) in a reaction. The reduced coke formation/deposition demonstrated by the catalyst of the present disclosure corroborates with the reduced acid site and higher metal dispersion on the catalyst of the present disclosure.

In a non-limiting embodiment, the expression 'contact or contacting' defined in the instant specification independently refers to impregnation, immersion and/or saturation, wherein there is a thorough interaction between the components.

In a non-limiting embodiment, the expression catalyst-2 described in the instant specification refers to the catalyst of the present disclosure having magnesium modified support matrix.

In a non-limiting embodiment, the expression catalyst-3 described in the instant specification refers to the catalyst of the present disclosure having barium modified support matrix.

In a non-limiting embodiment, the expression catalyst-4 described in the instant specification refers to the catalyst of the present disclosure having Lanthanum modified support matrix.

Additional embodiments and features of the present disclosure will be apparent to one of ordinary skill in art based upon description provided herein. The embodiments herein provide various features and advantageous details thereof in the description. Descriptions of well-known/conventional methods and techniques are omitted so as to not unnecessarily obscure the embodiments herein. The examples provided herein are intended merely to facilitate an understanding of ways in which the embodiments herein may be practiced and to further enable those of skill in the art to practice the embodiments herein. Accordingly, the following examples should not be construed as limiting the scope of the embodiments herein.

### EXAMPLES

The performance evaluation of unmodified catalyst (reference catalyst) used as a reference bench mark catalyst and lab prepared catalysts were carried out under identical reaction conditions i.e. at Pressure 7.3 kg/ cm², H₂/HC mol ratio 4, LHSV 1.95 h⁻¹, and reaction temperature 510 - 540°C using naphtha feed.

### Example 1: Process of preparing the catalyst of the present disclosure:

### Modification of alumina support

About 30g of alumina support is dried at a temperature of about 120°C for about 12hrs to remove the surface organic impurities and moisture. The dried alumina is immersed in a container containing magnesium nitrate solution (about 0.95g of magnesium nitrate in about 150ml water, wherein the metal (magnesium) content is 0.3wt%) having a pH of about 5 to about 6 for about 6hrs. Thereafter, the solution is removed by subjecting the immersed alumina with the solution to an equilibrium- rotary evaporator at 50°C to obtain magnesium modified alumina. Upon removal of the solvent, the magnesium modified alumina is dried at a temperature of about 120°C for about 12hrs to about 15hrs in an oven and calcined at a temperature of about 540°C for about 6hrs.

Alternatively about 30g of alumina support is dried at a temperature of about 120°C for about 12hrs to remove the surface organic impurities and moisture. The dried alumina is immersed in a container containing barium nitrate solution (about 0.171g of barium nitrate in about 150ml of water, wherein the metal (barium) content is 0.3wt%) having a pH of about 5 to about 6 for about 6hrs. Thereafter, the solution is removed by subjecting the immersed alumina with the solution to a equilibrium- rotary evaporator at 50°C to obtain barium modified alumina. Upon removal of the solvent, the barium modified alumina is dried at a temperature of about 120°C for about 12hrs to about 15hrs in an oven and calcined at a temperature of about 540°C for about 6hrs.

Alternatively about 30g of alumina support is dried at a temperature of about 120°C for about 12hrs to remove the surface organic impurities and moisture. The dried alumina is immersed in a container containing lanthanum nitrate (about 0.28g of lanthanum nitrate in about 150ml of distilled water, wherein the metal (lanthanum) content is 0.3wt%) solution having a pH of about 5 to about 6 for about 6hrs. Thereafter, the solution is removed by subjecting the immersed alumina with the solution to a equilibrium- rotary evaporator at 50°C to obtain lanthanum modified alumina. Upon removal of the solvent, the lanthanum modified alumina is dried at a temperature of about 120°C for about 12hrs to about 15hrs in an oven and calcined at a temperature of about 540°C for about 6hrs.

### Chloriding of modified alumina support

About 30g of calcined modified alumina support such as magnesium modified alumina, barium modified alumina and lanthanum modified alumina, respectively is immersed in about 150 ml of hydrochloride solution comprising about 0.8ml of 35% aqueous hydrogen chloride (molarity of about 11.5) for about 12hrs (ratio of alumina support to the volume of hydrogen chloride solution is about 1: 5), followed by drying the modified alumina at a temperature of about 120°C for about 12hrs to about 14hrs to obtain chlorinated magnesium-alumina support, chlorinated barium-alumina support and chlorinated lanthanum-alumina support, respectively.

### Metal impregnation of chlorinated alumina support

About 30g chlorinated magnesium modified alumina support, about 30g of chlorinated barium-alumina support and about 30g of chlorinated lanthanum-alumina support, respectively is immersed in a solution of platinum and tin solutions, which in-turn were prepared by using (H₂PtCl₆. (H₂O)₆) and SnCl₂, respectively.

2.61ml and 0.439 ml of platinum and tin solution, respectively are used in order to obtain the required 0.25wt% of platinum and tin in the final catalyst. The ratio of the impregnating solution (solution of platinum and tin) to the chlorinated magnesium alumina support, chlorinated barium-alumina support and chlorinated lanthanum-alumina support, respectively is about 1:5 (by weight) (solid to liquid ratio). To the above solution, 0.8964 ml of 35% hydrogen chloride solution (molarity of about 11.5) is added in order to avoid the precipitation of metal chloride in the solution. To this solution, chlorinated magnesium-alumina support, chlorinated barium-alumina support and chlorinated lanthanum-alumina support, respectively is immersed for about 12hrs to about 15hrs at a temperature of about 27°C to about 35°C with intermediate stirring. The solution is removed using equilibrium-rotary evaporator, followed by drying the alumina support having metals, at a temperature of about 120°C for about 12hrs in an oven. The dried chlorinated magnesium-alumina support, chlorinated barium-alumina support and chlorinated lanthanum-alumina support, respectively having platinum and tin, is finally calcined at a temperature of about 540°C for about 6hrs to obtain the final catalyst.

In an exemplary embodiment, the above mentioned process steps are also followed to obtain catalyst including but not limiting to active metal such as ruthenium, rhodium, palladium, osmium, iridium, promoter metal such as germanium, rhenium, gallium, bismuth, lead, indium, cerium and zinc, wherein the support matrix of the catalyst is modified by alkaline earth metal such as beryllium, calcium and strontium and lanthanide such as cerium, praseodymium, neodymium, promethium, samarium, europium, gadolinium, terbium, dysprosium, holmium, erbium, thulium, ytterbium and lutetium.

### Example 2: Comparative example illustrating the catalytic activity of the catalyst of the present disclosure (catalyst-2, Mg-alumina catalyst) and that of the unmodified catalyst (reference catalyst).

**Reaction condition:** Pressure about 7.3 Kg/cm², Liquid Hourly Space Velocity (LHSV) of about 1.95 h-1, H₂:HC mol ratio of about 4. The reaction temperature at the start of the reaction (SOR) is about 521°C and reaction temperature at the end of the reaction (EOR) is about 540 °C.

**Table 1: Performance comparison of the catalyst (catalyst-2) of the present disclosure and the reference catalyst.**

| | Reference catalyst | | Catalyst-2 (Mg-alumina catalyst) | |
|---|---|---|---|---|
| | SOR | EOR | SOR | EOR |
| Inlet temperature | 521 | 540 | 521 | 540 |
| H2 | 2.11 | 0.52 | 1.33 | 0.77 |
| C1 | 1.11 | 2.16 | 0.74 | 1.43 |
| C2 | 2.10 | 3.99 | 1.50 | 3.00 |
| C3 | 3.71 | 5.72 | 3.53 | 4.56 |
| IC4 | 1.93 | 2.06 | 1.96 | 2.06 |
| NC4 | 2.29 | 3.37 | 1.82 | 2.61 |
| **Total Gas YLD** | **13**.**25** | **17**.**83** | **10**.**88** | **14**.**42** |
| C6A | 1.25 | 0.62 | 1.49 | 1.10 |
| C7A | 16.25 | 10.35 | 18.14 | 15.34 |
| **Total C8A** | **32**.**20** | **20**.**44** | **34**.**17** | **28**.**29** |
| C9A | 19.86 | 11.22 | 20.14 | 16.69 |
| C10 A | 4.75 | 2.33 | 4.22 | 3.64 |
| C11+A | 1.53 | 0.00 | 1.09 | 1.36 |
| **Total AR.** | **75**.**84** | **44**.**96** | **79**.**24** | **66**.**42** |
| **Corr. C5⁺ YLD** | **86**.**75** | **82**.**17** | **89**.**12** | **85**.**58** |

### Observations of Table 1:

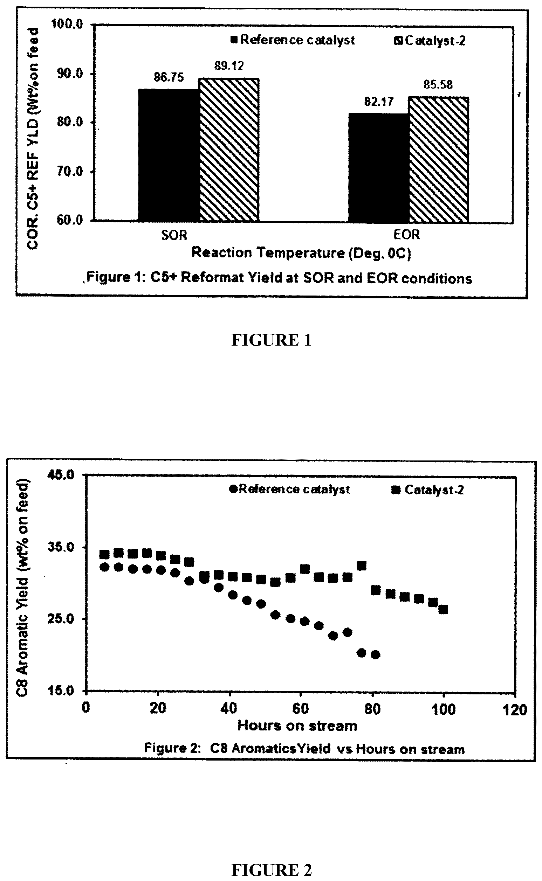

• The catalyst of the present disclosure (catalyst-2) at start of reaction (SOR) condition, demonstrates a C5+ reformate yield of about 89.12 wt%, which is higher than the unmodified catalyst (reference catalyst) by about 2.4%. At the end of reaction (EOR) condition, catalyst-2 demonstrates the C5+ reformate yield of about 85.58 wt%, which is about 4% higher than the reference catalyst. The C5+ reformate yield at SOR and EOR for catalyst-2 and reference catalyst is illustrated in figure 1.
• As the C5+ reformate yield in the presence of catalyst-2 is higher when compared to the reference catalyst both at SOR and EOR, the total gas yield obtained by the catalyst-2 is lower than the reference catalyst both at SOR and EOR, illustrating lower cracking activity and lower catalyst in case of catalyst-2 when compared to the reference catalyst.
• Catalyst-2 at start of reaction (SOR) condition, demonstrates the C8 aromatics yield of about 34.17 wt%, which is higher than the reference catalyst by about 2%. At the end of reaction (EOR) condition, catalyst-2 demonstrates the C8 aromatics yield of about 28.29 wt%, which is about 8% higher than the reference catalyst.
• Catalyst-2 at start of reaction (SOR) condition, demonstrates the total aromatics yield of about 79.24wt%, which is higher than the reference catalyst by about 3%. At the end of reaction (EOR) condition, catalyst-2 demonstrates the total aromatics yield of about 66.42wt%, which is about 21% higher than the reference catalyst.

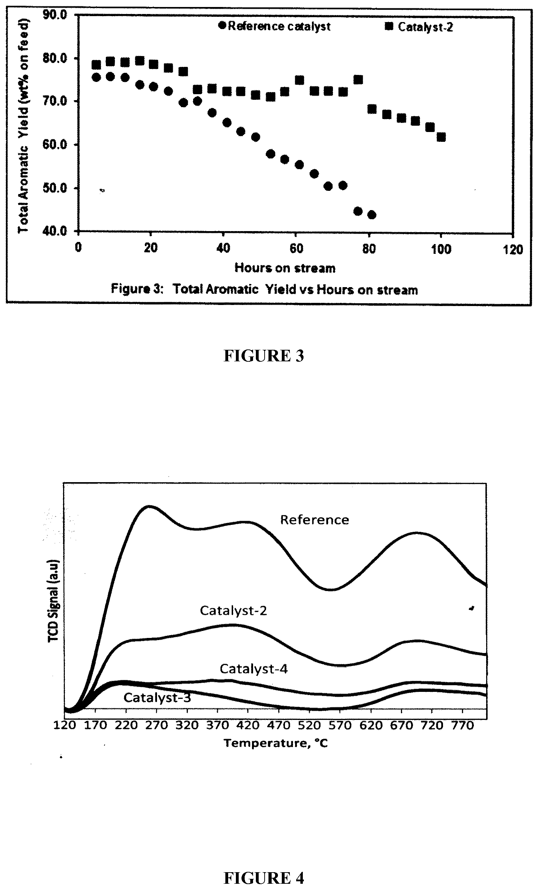

• Figures 2 and 3 illustrates the yields of C8 aromatics and total aromatics obtained by the catalyst-2 and reference catalyst, plotted as a function of hours on stream (HOS), wherein the plots demonstrate the consistent stability observed in catalyst-2 when compared to the reference catalyst.

**Table 2: Summary of % coke per Kg of feed processed in the presence of reference catalyst and catalyst-2**

| **Catalysts** | **% coke per Kg of feed processed** |
|---|---|
| Reference catalyst | 6.1 |
| Catalyst-2 | 2.9 |

### Observations of Table 2:

- The reaction subjected with the catalyst of the present disclosure (catalyst-2) illustrates the coke content (undesired product) of about 2.9%, which is much lesser than the coke content of about 6.1% illustrated by the reference catalyst. Thereby demonstrating reduced coke deposition in a reaction subjected with the catalyst of the present disclosure.

### Example 3: Acidity measurements of the catalyst-2 and reference catalyst

The effect of the magnesium on the nature of the acidic sites in catalyst-2 is studied by using NH₃-TPD adsorption-desorption method and the chemisorption profiles are obtained by catalyst-2 and reference catalyst, as illustrated in figure 4 and table 3 below. This figure illustrates that both the weak acid site and strong acid site in catalyst-2 is reduced when compared to the reference catalyst. Figure 4 illustrates three peaks, wherein 1^{st} peak is at about 260°C corresponding to weak acid site, 2^{nd} peak is at about 440°C corresponding to medium to strong acid site and 3^{rd} peak is at about 700°C corresponding to very strong acid site in the reference catalyst, whereas the peaks are not observed in catalyst-2. This distinct difference in the acidity pattern demonstrated by the catalyst-2 plays a significant role in performance and stability of the catalyst when compared to the reference catalyst, wherein the acidity of our catalyst -2 is modified. Similarly, the acidity pattern of catalyst-3 and catalyst-4 are modified, respectively. From table 3 below it can be observed that H₂ dispersion of catalyst-2 is about 98%, H₂ dispersion of catalyst-3 is about 93% and H₂ dispersion of catalyst-4 is about 95%, whereas the H₂ dispersion of reference catalyst is about 86%, indicating that the acidity patterns of the catalyst of the present disclosure (catalyst-2, catalyst-3 and catalyst-4) is improved/better than the reference catalyst, directly relating to the improved catalytic activity demonstrated by the catalysts of the present disclosure.

**Table 3: Depicts NH3-TPD and H2-dispersion of the reference catalyst and catalyst-2, 3 and 4, respectively.**

| **Sample** | **Total NH3 uptake (mmol/g)** | **H2-dispersion (%)** |
|---|---|---|
| Reference catalyst | 0.74 | 86 |
| Catalyst-2 | 0.71 | 98 |
| Catalyst-3 | 0.97 | 93 |
| Catalyst-4 | 0.48 | 95 |

### Example 4: Comparative study of the reduction of metal in catalyst-2 and reference catalyst in the presence of hydrogen.

Temperature Programmed Reduction (TPR) is carried out on a Micrometrics Autochem II chemisorption analyser instrument using about 200 mg samples (catalyst 2 and reference catalyst, respectively) for each experiment. The catalyst (reference catalyst and catalyst-2, respectively) is loaded into a quartz tube and allowed for stabilization of TCD (thermal conductivity signal) base line in the said analyser. Thereafter, H2-TPR is started from about room temperature to about 900°C at a heating rate of about 10 °C /min in about 10ml/min of 8% H₂ in Ar. A thermal conductivity detector (TCD) is used to monitor the consumption of H2.

### Observations:

Figure 5 illustrates the temperature programmed reduction (TPR) profiles for catalyst -2 and reference catalyst, wherein three reduction peaks are observed for catalyst-2 at 280°C, 320°C and 480°C, respectively. The first peak at 280°C is observed due to the reduction of platinum oxide and/or oxychlorplatinum surface complex, the second peak observed at 320°C is attributed to reduction of a part of Sn species from Sn⁴⁺ to Sn²⁺ state. The third peak at 480°C is due to reduction of the remaining Sn⁴⁺ to Sn²⁺ or may be to Sr⁰, which is seen in the Mg modified catalyst-2, whereas the third peak in case of reference catalyst appeared at a lower temperature, i.e., at 450°C, indicating that there is a strong interaction between metal (Pt) and support in Mg modified Catalyst-2, as compared to the reference catalyst, because the third peak appeared at 480°C and not earlier as in the case of the reference catalyst (at 450°C). The strong metal-support interaction restores active metal dispersion from agglomeration on the catalyst surface and thereby providing sustained higher activity of the catalyst.

Further, thermal conductivity detector (TCD) signal is an indication of hydrogen consumption during TPR studies. The TCD signal obtained with the catalyst-2 is very sharp (at 320°C and 480°C, respectively) in comparison with the reference catalyst, which exemplifies the strong metal and support interaction which is responsible for enhanced activity and stability of catalyst-2, unlike the reference catalyst.

### Example 5: Pore size distribution analysis study of catalyst-2 and reference catalyst.

The analysis of pore size distribution of the catalyst of the present disclosure (catalyst-2) and unmodified catalyst (reference catalyst) is carried by BJH (Barrett-Joyner-Halenda) method using Micromeritics ASAP 2020 apparatus.

Figure 6 illustrates that the pore size distribution of catalyst-2 is ranging from about 20°A to about 100°A, whereas the pore size distribution of the reference catalyst is ranging from about 30°A to about 150°A. The narrower pore size distribution observed in catalyst-2 demonstrates that the metal (Pt) dispersion is proportionately high when compared to the reference catalyst having wider pore size distribution and thereby catalyst-2 demonstrates better performance stability when compared to the reference catalyst.

### Example 6: Comparative analysis of the catalyst of the present disclosure (catalyst -3, Ba-alumina catalyst) with that of the unmodified catalyst (reference catalyst):

**Reaction condition:** Pressure about 7.3 Kg/cm², Liquid Hourly Space Velocity (LHSV) of about 1.95 h-1, H2:HC mol ratio of about 4. The reaction temperature at the start of the reaction (SOR) is about 521°C and reaction temperature at the end of the reaction (EOR) is about 540 °C.

**Table 4: Performance comparison of the catalyst (catalyst-3) of the present disclosure and the reference catalyst.**

| | **Reference catalyst** | | **Catalyst-3 (Ba-alumina catalyst)** | |
|---|---|---|---|---|
| | SOR | EOR | SOR | EOR |
| Inlet temperature | 521 | 540 | 521 | 540 |
| **H2** | **2**.**11** | **0**.**52** | **1**.**72** | **0**.**76** |
| C1 | 1.11 | 2.16 | 0.82 | 1.27 |
| C2 | 2.10 | 3.99 | 2.20 | 2.47 |
| C3 | 3.71 | 5.72 | 4.22 | 3.68 |
| IC4 | 1.93 | 2.06 | 2.23 | 1.45 |
| NC4 | 2.29 | 3.37 | 2.32 | 2.15 |
| **Total Gas YLD** | **13**.**25** | **17**.**83** | **13**.**50** | **11**.**77** |
| C6A | 1.25 | 0.62 | 1.66 | 1.21 |
| C7A | 16.25 | 10.35 | 18.61 | 15.74 |
| **Total C8A** | **32**.**20** | **20**.**44** | **33**.**61** | **27**.**85** |
| C9A | 19.86 | 11.22 | 19.20 | 15.70 |
| C10A | 4.75 | 2.33 | 3.79 | 3.42 |
| C11+A | 1.53 | 0.00 | 1.17 | 1.69 |
| **Total AR**. | **75**.**84** | **44**.**96** | **78**.**05** | **65**.**62** |
| **Corr. C5**⁺ **YLD** | **86**.**75** | **82**.**17** | **86**.**50** | **88**.**23** |

### Observations of Table-4:

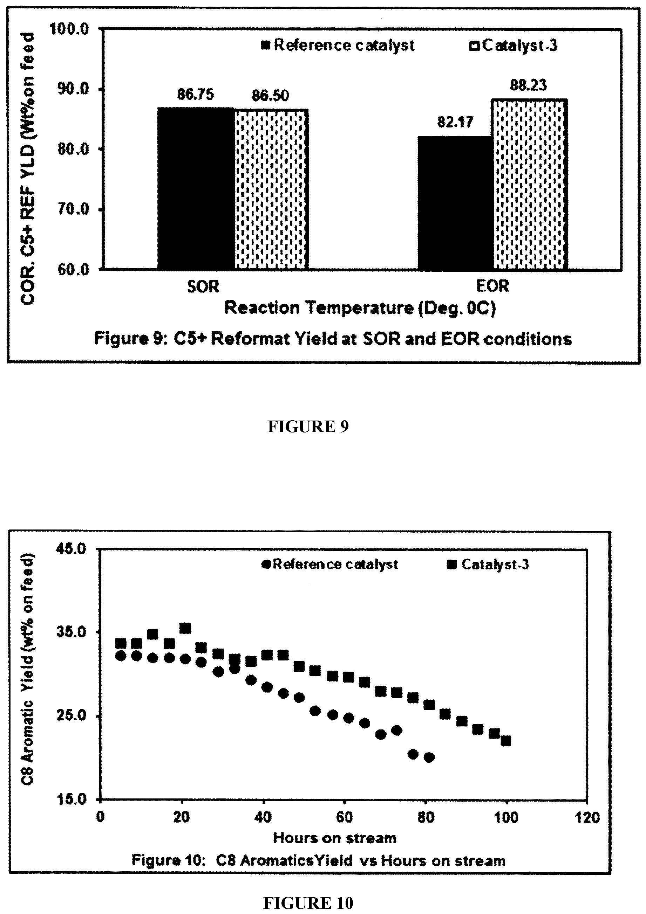

- The catalyst of the present disclosure (catalyst-3) at SOR condition, demonstrates a C5+ reformate yield of about 86.5 wt%, which is close to that of unmodified catalyst (reference catalyst). At EOR condition, catalyst-3 demonstrates the C5+ reformate yield of about 88.23 wt%, which is about 6% higher than the reference catalyst. The C5+ reformate yield at SOR and EOR for catalyst-3 and reference catalyst is illustrated in Figure 9.
- As the C5+ reformate yield in the presence of catalyst-3 is higher when compared to the reference catalyst at EOR, the total gas yield obtained by the catalyst-3 is lower than the reference catalyst at EOR, illustrating lower cracking activity and lower catalyst deactivation in case of catalyst-3 when compared to the reference catalyst.
- Catalyst-3 at SOR condition, demonstrates the C8 aromatics yield of about 33.61 wt%, which is higher than the reference catalyst by about 1%. At the EOR condition, catalyst-3 demonstrates the C8 aromatics yield of about 27.85 wt%, which is about 7% higher than the reference catalyst.
• Catalyst-3 at SOR condition, demonstrates the total aromatics yield of about 78.05wt%, which is higher than the reference catalyst by about 2%. At the EOR condition, catalyst-3 demonstrates the total aromatics yield of about 65.62wt%, which is about 20% higher than the reference catalyst.

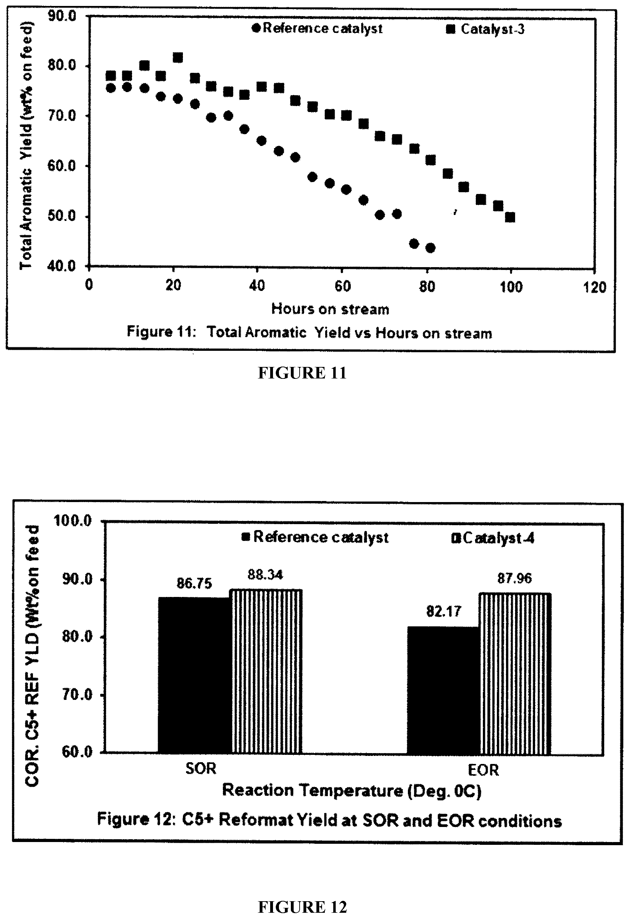

• Figures 10 and 11 illustrate the yields of C8 aromatics and total aromatics obtained by the catalyst-3 and reference catalyst, plotted as a function of hours on stream (HOS), wherein the plots demonstrate the consistent stability observed in catalyst-3 when compared to the reference catalyst.

**Table 5: Summary of % coke per K₂ of feed processed in the presence of reference catalyst and catalyst-3**

| **Catalysts** | **% coke per Kg of feed processed** |
|---|---|
| Reference catalyst | 6.1 |
| Catalyst-3 | 2.6 |

### Observations of Table 5:

The reaction subjected with the catalyst of the present disclosure (catalyst-3) illustrates the coke content (undesired product) of about 2.6%, which is much lesser than the coke content of about 6.1% illustrated by the reference catalyst. Thereby demonstrating reduced coke deposition in a reaction subjected with the catalyst of the present disclosure.

### Example 7: Comparative analysis of the catalyst of the present disclosure (catalyst -4, La-alumina catalyst) with that of the unmodified catalyst (reference catalyst):

**Reaction condition:** Pressure about 7.3 Kg/cm², Liquid Hourly Space Velocity (LHSV) of about 1.95 h-1, H2:HC mol ratio of about 4. The reaction temperature at the start of the reaction (SOR) is about 521°C and reaction temperature at the end of the reaction (EOR) is about 540 °C.

**Table 6: Performance comparison of the catalyst (catalyst-4) of the present disclosure and the reference catalyst.**

| | **Reference catalyst** | | **Catalyst-4 (La-alumina catalyst)** | |
|---|---|---|---|---|
| | SOR | EOR | SOR | EOR |
| Inlet temperature | 521 | 540 | 521 | 540 |
| **H2** | **2**.**11** | **0**.**52** | **1**.**59** | **0**.**54** |
| C1 | 1.11 | 2.16 | 0.81 | 1.42 |
| C2 | 2.10 | 3.99 | 2.02 | 2.60 |
| C3 | 3.71 | 5.72 | 3.48 | 3.87 |
| IC4 | 1.93 | 2.06 | 1.90 | 1.31 |
| NC4 | 2.29 | 3.37 | 1.85 | 2.31 |
| **Total Gas YLD** | **13**.**25** | **17**.**83** | **11**.**66** | **12**.**04** |
| C6A | 1.25 | 0.62 | 1.55 | 0.66 |
| C7A | 16.25 | 10.35 | 18.33 | 11.52 |
| **Total C8A** | **32**.**20** | **20**.**44** | **34**.**34** | **21**.**69** |
| C9A | 19.86 | 11.22 | 20.52 | 11.11 |
| C10A | 4.75 | 2.33 | 4.20 | 1.95 |
| C11+A | 1.53 | 0.00 | 1.56 | 1.23 |
| **Total AR**. | **75**.**84** | **44**.**96** | **80**.**50** | **48**.**17** |
| **Corr. C5**⁺ **YLD** | **86**.**75** | **82**.**17** | **88**.**34** | **87**.**96** |

### Observations of Table-6:

- The catalyst of the present disclosure (catalyst-4) at SOR condition, demonstrates a C5+ reformate yield of about 88.34 wt%, which is more than 1% higher to that of unmodified catalyst (reference catalyst). At EOR condition, catalyst-4 demonstrates the C5+ reformate yield of about 87.96 wt%, which is about 5% higher than the reference catalyst. The C5+ reformate yield at SOR and EOR for catalyst-4 and reference catalyst is illustrated in Figure 12.
- As the C5+ reformate yield in the presence of catalyst-4 is higher when compared to the reference catalyst at SOR and EOR, accordingly the total gas yield obtained by the catalyst-4 is lower than the reference catalyst at EOR, illustrating lower cracking activity and lower catalyst deactivation in case of catalyst-4 when compared to the reference catalyst.
- Catalyst-4 at SOR condition, demonstrates the C8 aromatics yield of about 34.34 wt%, which is higher than the reference catalyst by about 2%. At the EOR condition, catalyst-4 demonstrates the C8 aromatics yield of about 21.69 wt%, which is about 1.0% higher than the reference catalyst.
- Catalyst-4 at SOR condition, demonstrates the total aromatics yield of about 80.5wt%, which is higher than the reference catalyst by about 4.5%. At the EOR condition, catalyst-4 demonstrates the total aromatics yield of about 48.17wt%, which is about 3% higher than the reference catalyst.

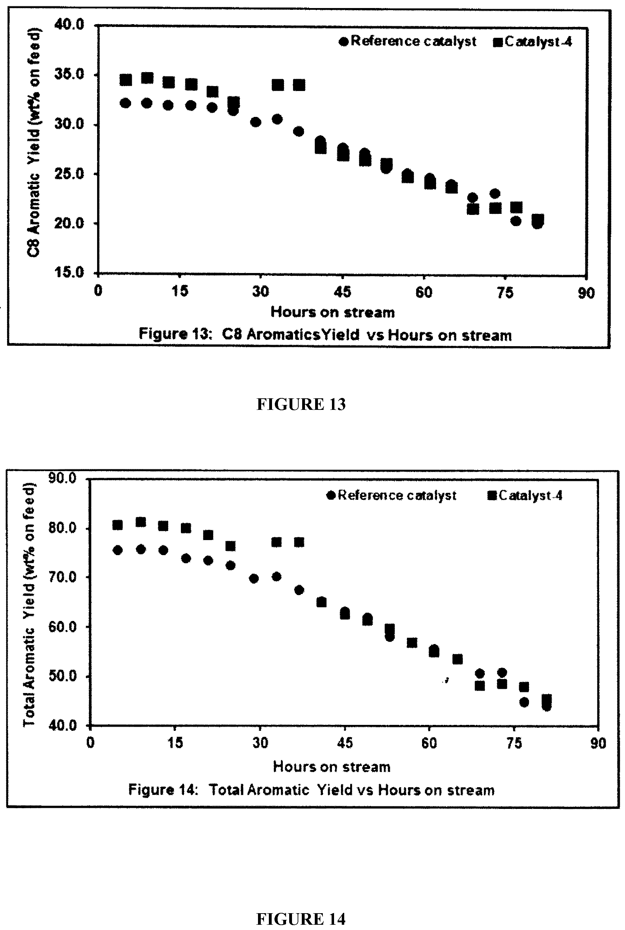

Figures 13 and 14 illustrates the yields of C8 aromatics and total aromatics obtained by the catalyst-4 and reference catalyst, plotted as a function of hours on stream (HOS).

**Table 7: Summary of % coke per K₂ of feed processed in the presence of reference catalyst and catalyst-4**

| **Catalysts** | **% coke per Kg of feed processed** |
|---|---|
| Reference catalyst | 6.1 |
| Catalyst-4 | 4.5 |

### Observations of Table 7:

The reaction subjected with the catalyst of the present disclosure (catalyst-4) illustrates the coke content (undesired product) of about 4.5%, which is much lesser than the coke content of about 6.1% illustrated by the reference catalyst. Thereby demonstrating reduced coke deposition in a reaction subjected with the catalyst of the present disclosure.

## Claims

1. A catalyst composition comprising support matrix, active metal, promoter metal and halide, wherein the support matrix is a modified support matrix and wherein the coke formation is reduced to at least 4% to 5% per kg of a feed processed.

2. The catalyst composition as claimed in claim 1, wherein the modified support matrix comprises an inorganic oxide and a modifier; wherein the modifier is selected from a group comprising alkaline earth metal and lanthanide or a combination thereof; and the inorganic oxide is selected from a group comprising alpha alumina, theta alumina, gamma alumina, delta alumina, eta alumina, silica alumina, cordierite, zirconia, titania, zeolites and non-zeolitic molecular sieves (NZMS), or any combination thereof;
wherein the alkaline earth metal is selected from a group comprising beryllium, magnesium, calcium, strontium and barium, or any combination thereof; and wherein the lanthanide is selected from a group comprising lanthanum, cerium, praseodymium, neodymium, promethium, samarium, europium, gadolinium, terbium, dysprosium, holmium, erbium, thulium, ytterbium and lutetium, or any combination thereof.

3. The catalyst composition as claimed in claim 2, wherein the alkaline earth metal is magnesium or barium, the lanthanide is lanthanum and the inorganic oxide is gamma alumina.

4. The catalyst composition as claimed in claim 1, wherein the active metal is selected from a group comprising ruthenium, rhodium, palladium, osmium, iridium and platinum, or any combination thereof; wherein the promoter metal is selected from a group comprising tin, germanium, rhenium, gallium, bismuth, lead, indium, cerium and zinc, or any combination thereof; and wherein the halide is selected from a group comprising fluorine, chlorine, bromine, iodine and astatine, or any combination thereof.

5. The catalyst composition as claimed in claim 1, wherein the active metal is platinum; wherein the promoter metal is tin; and wherein the halide is chloride.

6. The catalyst composition as claimed in claim 2, wherein inorganic oxide is at a concentration ranging from about 97 wt% to about 99 wt%; and wherein the modifier is at a concentration ranging from about 0.01 wt% to about 0.5 wt %.

7. The catalyst composition as claimed in claim 1, wherein the active metal is at a concentration ranging from about 0.01wt% to about 0.5wt%; wherein the promoter metal is at a concentration ranging from about 0.01wt% to about 0.5wt%; wherein the halide is at a concentration ranging from about 0.8wt% to about 1.2wt%; and wherein the active metal dispersion in the catalyst composition is ranging from about 93% to about 98% and pore size distribution of the catalyst composition is ranging from about 20°A to about 100°A.

8. The catalyst composition as claimed in claim 1, wherein total C8 aromatic yield obtained by the catalyst composition is ranging from about 33% to about 35% at start of a reaction and ranging from about 21% to about 29% at end of a reaction; and wherein total aromatic yield obtained by the catalyst composition is ranging from about 78% to about 81% at start of a reaction and ranging from about 48% to about 67% at end of a reaction.

9. A process for preparing the catalyst composition as claimed in claim 1, said process comprising steps of:
a. subjecting a support matrix to a modifier, followed by drying and calcining the support matrix to obtain a modified support matrix;
b. contacting the modified support matrix of step a) with a halide; and
c. contacting the modified support matrix of step b) with active metal and promoter metal, followed by calcining to obtain the catalyst composition.

10. The process as claimed in claim 9 (a), wherein the support matrix is an inorganic oxide selected from a group comprising alpha alumina, theta alumina, gamma alumina, delta alumina, eta alumina, silica alumina, cordierite, zirconia, titania, zeolites and non-zeolitic molecular sieves (NZMS), or any combination thereof; the active metal is selected from a group comprising ruthenium, rhodium, palladium, osmium, iridium and platinum, or any combination thereof;
the promoter metal is selected from a group comprising tin, germanium, rhenium, gallium, bismuth, lead, indium, cerium and zinc, or any combination thereof;
the modifier is selected from a group comprising alkaline earth metal and lanthanide or a combination thereof; and wherein the support matrix is subjected to the modifier in solution form at a temperature ranging from about 15°C to about 35°C, for a time period ranging from about 4 hours to about 8 hours, preferably for about 6 hours, followed by removing the solution by rotary evaporator having a maximum speed of 50 rpm at a temperature ranging from about 40°C to about 60 °C to obtain the modified support matrix;
the alkaline earth metal is selected from a group comprising beryllium, magnesium, calcium, strontium and barium, or any combination thereof;
the lanthanide is selected from a group comprising lanthanum, cerium, praseodymium, neodymium, promethium, samarium, europium, gadolinium, terbium, dysprosium, holmium, erbium, thulium, ytterbium and lutetium, or any combination thereof; and
the halide is selected from a group comprising fluorine, chlorine, bromine, iodine and astatine, or any combination thereof.

11. The process as claimed in claim 10, wherein pH of the modifier solution ranges from about 5 to about 6, preferably about 5.75; and wherein the support matrix is subjected to the modifier solution at a solid: liquid ratio ranging from about 1:3 to about 1:7, preferably about 1:5, wherein the modifier is at a concentration ranging from about 0.01 wt% to about 0.5 wt %.

12. The process as claimed in claim 9(b), wherein the modified support matrix is contacted with the halide in solution form at a temperature ranging from about 15°C to about 27°C for a time period ranging from about 12 hours to about 18 hours, preferably about 15 hours, to obtain halide modified support matrix, wherein concentration of the halide is ranging from about 0.8wt% to about 1.2wt%.

13. The process as claimed in 9 (c), wherein the modified support matrix is contacted with the active metal and the promoter metal, respectively in solution form at a temperature ranging from about 15°C to about 35°C, for a time period ranging from about 10 hours to about 15 hours, preferably 12 hours, wherein concentration of the active metal and the promoter metal is ranging from about 0.01wt% to about 0.5wt%, respectively.

14. The process as claimed in claim9, wherein the drying is carried out at a temperature ranging from about 100°C to about 120°C for a time period ranging from about 12 hours to about 18 hours; and wherein the calcining is carried out at a temperature ranging from about 510°C to about 560°C for a time period ranging from about 4 hours to about 8 hours.

15. Use of a catalyst composition for reducing coke formation to at least 4% to 5% per kg of a feed, wherein the catalyst composition comprises support matrix, active metal, promoter metal and halide and wherein the support matrix is a modified support matrix.

16. The use as claimed in claim 15, wherein the catalyst composition further enhances reformate yield by increasing total aromatic yield and C8 aromatic yield, wherein the total aromatic yield is ranging from about 78% to about 81% at start of a reaction and ranging from about 48% to about 67% at end of a reaction, and total C8 aromatic yield is ranging from about 33% to about 35% at start of a reaction and ranging from about 21 % to about 29% at end of a reaction.
